# EUROPEAN PATENT SPECIFICATION

(11) **EP 0 475 499 B1**
(45) Date of publication and mention of the grant of the patent: **22.11.1995**
(21) Application number: 91202180.5
(22) Date of filing: 28.08.1991
(51) Int. Cl.: H04N 5/44

(54) **Motion compensated frame rate conversion**
Bewegungskompensierte Bildfrequenzumwandlung
Conversion de fréquence d'image à compensation de mouvement

(30) Priority: 03.09.1990 EP 90202329
(43) Date of publication of application: 18.03.1992
(73) Proprietor: Philips Electronics N.V., 5621 BA Eindhoven (NL)
(72) Inventor: De Haan, Gerard, NL-5656 AA Eindhoven (NL); De Poortere, Gerrit Frederik Magdalena, NL-5656 AA Eindhoven (NL)
(74) Representative: Kooiman, Josephus Johannes Antonius

(56) References cited:
- EP-A- 0 339 365
- US-A- 4 731 651
- IEEE TRANSACTIONS ON CONSUMER ELECTRONICS, vol. 35, no. 3, August 1989, pages272-278, New York, US; P. HAAVISTO et al.: "Fractional frame rate up-conversion using weighted median filters"

## Description

The present invention relates to television systems, and, in particular, to television systems wherein a field rate conversion from a given rate to a rate which is a multiple of the first rate takes place.

Field rate conversion systems wherein the standard field rate, for example 50 Hz is converted to a double field rate of 100 Hz are known. The reason for field rate conversion is the flicker which results from a field rate which is less than the persistency of the vision of the human eye as well as alias problems which result from an insufficiently high sampling rate. EP-A-0,339,365 discloses a field rate doubler in which low frequency components of the output fields are alternatingly obtained by taking a weighted sum of three quarters of the low frequency components of an odd input field and one quarter of the low frequency components of an even input field, or by taking a weighted sum of one quarter of the low frequency components of the odd input field and three quarters of the low frequency components of the even input field. In the presence of motion, however, such processing will cause disturbing motion blur.

To generate signals which, together, will constitute a field between two existing fields without such motion blur, the magnitude and direction of the velocity of an object or of a given part of the object must be determined. If the velocity is known, it is possible, on the basis of a received input field to extrapolate where the position of the object would be a given time interval later and thus interpolate a second output field for the one input field.

In known motion compensated field rate conversion systems, the interpolation is carried out by extrapolating the position of the field between two given fields individually from each of these fields and then averaging the result. In most cases the interpolated fields resulting from this procedure are distorted and/or blurred. Although the defects are masked by the fact that every other field at the higher rate is not distorted, the degradation of the picture quality can be very disturbing.

It is an object of the present invention to convert the field rate of an incoming television field sequence with a substantially decrease in the degradation of the picture quality without, however, introducing additional hardware expense. To this end, a first aspect of the invention provides a video frame rate conversion apparatus as defined in claim 1. A second aspect of the invention provides a video frame rate conversion method as defined in claim 8. Advantageous embodiments are defined in the dependent claims. In the claims, any reference signs placed between parentheses shall not be construed as limiting the claim.

In accordance with the present invention, a series of incoming fields having an input field rate is received. Each incoming field is spaced a predetermined first time interval from the next. A motion compensated time-shift of each of the incoming fields is performed for a first time-shift interval and a second time-shift interval, thereby creating a first and second time-shifted field. The time-shifted fields constitute a video signal series having an output field rate which is twice the input field rate.

Although it may seem a disadvantage that the output signal consists of time-shifted fields only and that the incoming fields are not outputted, applicants have found that the picture quality is improved because the interpolation distance is virtually halved (in 50 Hz to 100 Hz conversion: 5 ms instead of 10 ms) which implies that the amplitudes of any errors in the motion vector are halved also.

The operation and further features of the present invention will be clear from the following description taken in conjunction with the drawing.
Figure 1 is a schematic diagram illustrating the time shifts of a first embodiment of the present invention;
Figure 2 is a block diagram of circuits implementing the time shifts of Fig. 1;
Figure 3 is a schematic diagram illustrating the time shifts of a second embodiment of the present invention;
Figure 4 is a block diagram of circuits implementing the time shifts of Fig. 3;
Figure 5 is a schematic diagram illustrating the time shifts of a third embodiment of the present invention;
Figure 6 is a block diagram of circuits implementing the time shifts of Fig. 5.

The following description will make use of terms such as "field", "odd field" and "even field". It should be noted, however, that this is done for convenience only. The "fields" are assumed to have a progressive scan line pattern. If interlaced fields are received, it is assumed that the progressive scan will be created by interpolation of lines between sequential received lines in accordance with any of the known methods for such interpolation. If an interlaced output is then desired, that can be created by dropping alternate lines in each output field, again in accordance with the well-known methods.

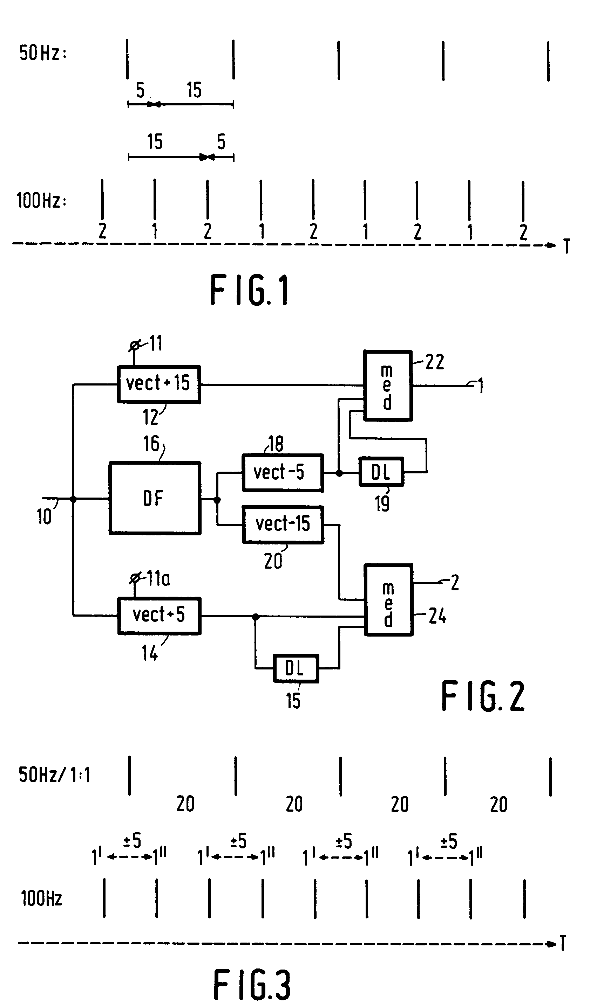

One embodiment of the upconversion method of the present invention is illustrated in Fig. 1. The input at 50 Hz is illustrated on the top line of Fig. 1. The output at twice the field rate, namely 100 Hz is illustrated in the bottom line of Fig. 1. It will be seen that each interpolated field is within 5 ms of one of the received fields and within 15 ms of another. While it may seem a disadvantage not to use the incoming fields per se, this is compensated for by the fact that the interpolation distance is virtually halved (5 ms instead of 10 ms) and the distortions in two successive 100 Hz fields may be made to be in opposite phase.

To implement the system so that the interpolated value corresponds more closely to the field from which it is removed by only 5 ms, the values derived from the two fields, one at the 5 ms distance and the other at the 15 ms distance, are median filtered using two values derived from the closer field. The hardware for implementing this embodiment is illustrated in Fig. 2. In Fig. 2 the incoming video signal is received at a terminal 10. Motion vectors for each block in the signal, the blocks being groups of one or more pixels, are available at terminals 11 and 11a. The computation of the motion vectors by any of the known methods is not a part of this invention and will not be described further herein. The value of the video signal at a location corresponding to a 15 ms time interval is computed using the motion vectors in a stage 12, while the value of each pixel in the block at a time 5 ms earlier is calculated in a block 14. In this description, the sign of a motion vector is defined such that a positive motion vector points into the past. The incoming signal is also applied to a field delay 16. At the output of the field delay, again on the basis of associated motion vectors, the value of each block in the image at a time interval 5 ms later is calculated in a stage 18, while the value at a time 15 ms later is calculated in a stage 20. Two outputs of stage 18, separated by e.g. a line interval in delay 19 are applied to respective inputs of a median filter 22 whose other input receives the output of stage 12. Similarly, a median filter 24 receives the output of stage 20 and two outputs of stage 14 separated by a line interval by a delay 15. The output of median filter 22 constitutes the fields labelled 1 in Fig. 1, while that of median filter 24 constitutes the fields labelled 2. Alternatively to the delays a RAM could be used. The "5" motion vectors are calculated by dividing the corresponding 20 ms (field to field) motion vectors by a factor of 4. The motion vector for the 15 ms interval is then derived by multiplying the 5 ms motion vector by a factor of 3.

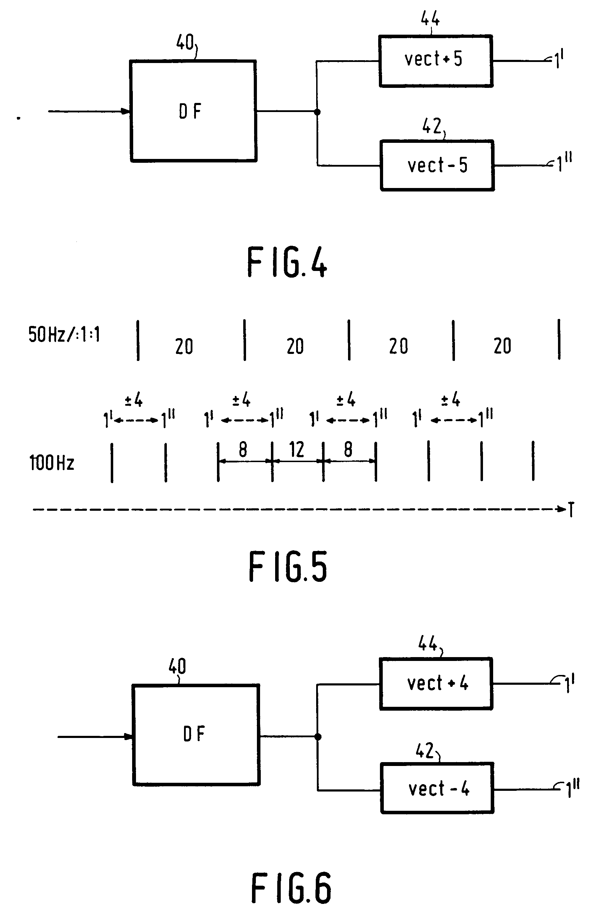

A schematic diagram of the basic operation of a second embodiment of the present invention as illustrated in Fig. 3. Here it is again assumed that the incoming fields are sequentially scanned fields. As reference to Fig. 3 will show, the basic idea is simple. Each field is shifted over 5 ms in both the positive and negative temporal direction, which means that fields at time intervals 5 ms later and earlier are calculated on the basis of ± 5 ms motion vectors. The required hardware is illustrated in Fig. 4. A field delay 40 delays the incoming signal which, as mentioned above, is a progressive scan video signal. Each progressive field is then shifted to a later time in a stage 42 which symbolizes use of a 5 ms motion vector. Similarly, a 5 ms motion vector but towards an earlier time occurs in a stage 44. The output of stage 44 thus comprises the fields indicated by 1′ in Fig. 3 while that of stage 42 corresponds to the 1˝ fields. The two outputs together constitute two fields (frames) of a progressively scanned 100 Hz video signal.

Figure 5 illustrates another method of field rate conversion. In Fig. 5, each field, instead of being shifted by plus and minus 5 ms is shifted by plus and minus 4 ms. This yields the advantage that distortions due to incorrect motion vectors become less visible. On the other hand, for rapidly moving images the blur associated with field repetition systems may occur. The necessary hardware is illustrated in fig. 6. No further discussion of this figure is necessary since it operates as does the system of fig. 4.

As it is possible to measure the quality of the motion vectors, e.g. by taking the match error of vectors obtained by a block matching motion estimator, this quality measure can be used to attenuate the time-shift. If the quality measure is very low, it is even possible to fall back to field repetition (time-shift equals zero).

Although the present invention has been illustrated in preferred embodiments, other variations, both in the delay used and in the implementation are possible and will readily occur to one skilled in the art. It is e.g. possible to use the present invention in 60 Hz to 120 Hz conversion. The motion vector quality dependent time shift attenuation feature can also be employed in 60 Hz to 50 Hz or 50 Hz to 60 Hz field rate conversion apparatuses. In that case, the nominal time shifts will not be fixed amounts of 5 and 15 ms, but depend on the mutual position of the 50 Hz fields and the 60 Hz fields. Also in this case it is possible to reduce the time shifts by a factor which depends on the quality of the motion vectors.

## Claims

1. Video field rate conversion apparatus, comprising:
means (10) for receiving a series of incoming fields having an input field rate, each incoming field being spaced a predetermined first time interval from the next, and characterized by:
means (11-24; 40-44) for performing a motion compensated time-shift of each of said incoming fields by a first time-shift interval in a first direction to generate a first time-shifted field (1) preceding a corresponding incoming field, and for performing a motion compensated time-shift of each of said incoming fields by a second time-shift interval in a second direction opposite to said first direction to generate a second time-shifted field (2) following said corresponding incoming field in time, said first and second time-shift intervals being smaller than said first time interval, and said time-shifted fields (1, 2) constituting a video signal series having an output field rate which is twice said input field rate, wherein the output signal consists of time-shifted fields (1, 2) only and the incoming fields are not outputted.

2. Conversion apparatus as claimed in Claim 1, wherein said first time-shift interval is equal to said second time-shift interval.

3. Conversion apparatus as claimed in Claim 1 or 2, wherein said first time-shifted field (1) occurs between a first and second one of said incoming fields, and wherein said time-shifting means (11-24) includes a field delay (16) and means (11; 18, 19; 22) coupled to an input and an output of said field delay (16) for generating said first time-shifted field (1) in dependence on both said first and second incoming fields.

4. Conversion apparatus as claimed in Claim 3, wherein first said time-shifted field (1) is closer in time to said first incoming field, and wherein said time-shifting means (11-24) weights values from said first incoming field higher than values from said second incoming field when generating said first time-shifted field (1).

5. Conversion apparatus as claimed in Claim 1, wherein said first and second time-shift intervals are each one quarter of said predetermined first time interval.

6. Conversion apparatus as claimed in Claim 1, wherein said first and second time-shift intervals depend on a quality of motion vectors applied to said time-shifting means.

7. Conversion apparatus as claimed in any one of the preceding Claims, wherein said time-shifting means (40-44) comprises a field delay (40) for generating delayed incoming signals, and first (42) and second (44) shift means operative under control of motion vectors for shifting points in said delayed field in accordance with said motion vectors to generate said first (1′) and second (1˝) time-shifted fields.

8. Video field rate conversion method, comprising the step of:
receiving (10) a series of incoming fields having an input field rate, each incoming field being spaced a predetermined first time interval from the next, and characterized by the steps of:
performing (11-24; 40-44) a motion compensated time-shift of each of said incoming fields by a first time-shift interval in a first direction to generate a first time-shifted field (1) preceding a corresponding incoming field, and performing a motion compensated time-shift of each of said incoming fields by a second time-shift interval in a second direction opposite to said first direction to generate a second time-shifted field (2) following said corresponding incoming field in time, said first and second time-shift intervals being smaller than said first time interval, and said time-shifted fields (1, 2) constituting a video signal series having an output field rate which is twice said input field rate, wherein the output signal consists of time-shifted fields (1, 2) only and the incoming fields are not outputted.

## Patentansprüche

1. Video-Teilbildfrequenzumwandlungseinrichtung mit:
Mitteln (10) zum Empfangen einer Reihe eintreffender Teilbilder mit einer Eingangs-Teilbildfrequenz, wobei jedes eintreffende Teilbild in einem Abstand entsprechend einem vorbestimmten ersten Zeitintervall von dem nächsten entfernt liegt, und durch die nachfolgenden Elemente gekennzeichnet ist:
Mittel (11-24; 40-44) zum Durchführen einer bewegungskompensierten Zeitverschiebung jedes der genannten eintreffenden Teilbilder um ein erstes Zeitverschiebungsintervall in einer ersten Richtung zum Erzeugen eines ersten zeitverschobenen Teilbildes (1) vor einem entsprechenden eintreffenden Teilbild und zum Durchführen einer bewegungskompensierten Zeitverschiebung jedes der genannten eintreffenden Teilbilder um ein zweites Zeitverschiebungsintervall in einer zweiten Richtung, die der genannten ersten Richtung entgegengesetzt ist zum Erzeugen eines zweiten zeitverschobenen Teilbildes (2) nach dem genannten entsprechenden eintreffenden Teilbild, wobei das genannte erste und zweite Zeitverschiebungsintervall kleiner ist als das genannte erste Zeitintervall, und die genannten zeitverschobenen Teilbilder (1, 2) eine Video-Signalreihe mit einer Ausgangs-Teilbildfrequenz bilden, die zweimal größer ist als die genannte Eingangs-Teilbildfrequenz, wobei das Ausgangssignal nur aus zeitverschobenen Teilbildern (1, 2) besteht und die eintreffenden Teilbilder nicht ausgegeben werden.

2. Umwandlungseinrichtung nach Anspruch 1, wobei das genannte erste Zeitverschiebungsintervall dem genannten zweiten Zeitverschiebungsintervall entspricht.

3. Umwandlungseinrichtung nach Anspruch 1 oder 2, wobei das genannte erste zeitverschobene Teilbild (1) zwischen einem ersten und einem zweiten Teilbild der genannten eintreffenden Teilbilder auftritt, und wobei die genannten Zeitverschiebungsmittel (11-24) eine Teilbildverzögerung (16) und Mittel (11; 18, 19; 22) aufweisen, die mit einem Eingang und einem Ausgang der genannten Teilbildverzögerung (16) gekoppelt sind zum Erzeugen des genannten ersten zeitverschobenen Teilbildes (1) abhängig von dem ersten sowie dem zweiten eintreffenden Teilbild.

4. Umwandlungseinrichtung nach Anspruch 3, wobei das erste genannte zeitverschobene Teilbild (1) in der Zeit gesehen näher bei dem genannten ersten eintreffenden Teilbild liegt, und wobei die genannten Zeitverschiebungsmittel (11-24) Werte von dem genannten ersten eintreffenden Teilbild, die höher sind als Werte von dem genannten zweiten eintreffenden Teilbild gewichtet, beim Erzeugen des genannten ersten zeitverschobenen Teilbildes (1).

5. Umwandlungseinrichtung nach Anspruch 1, wobei die genannten ersten und zweiten Zeitverschiebungsintervalle je ein Viertel des genannten vorbestimmten ersten Zeitintervalls sind.

6. Umwandlungseinrichtung nach Anspruch 1, wobei die genannten ersten und zweiten Zeitverschiebungsintervalle von einer Qualität von Bewegungsvektoren abhängig ist, die den genannten Zeitverschiebungsmitteln zugeführt werden.

7. Umwandlungseinrichtung nach einem der vorstehenden Ansprüche, wobei die genannten Zeitverschiebungsmittel (40-44) eine erste Teilbildverzögerung (40) aufweisen zum Erzeugen verzögerter eintreffender Signale, und wobei die ersten (42) und zweiten (44) Schiebemittel unter Ansteuerung von Bewegungsvektoren für Verschiebungspunkte in dem genannten verzögerten Teilbild entsprechend den genannten Bewegungsvektoren wirksam sind zum Erzeugen der genannten ersten (1′) und zweiten (1˝) zeitverschobenen Teilbilder.

8. Video-Teilbildfrequenzumwandlungsverfahren, das den nachfolgenden Verfahrensschritt aufweist:
das Empfangen (10) einer Reihe eintreffender Teilbilder mit einer Eingangs-Teilbildfrequenz, wobei jedes eintreffende Teilbild in einem Abstand entsprechend einem vorbestimmten ersten Zeitintervall von dem nächsten entfernt liegt, und durch die nachfolgenden Verfahrensschritte gekennzeichnet sind:
das Durchführen (11-24; 40-44) einer bewegungskompensierten Zeitverschiebung jedes der genannten eintreffenden Teilbilder um ein ersten Zeitverschiebungsintervall in einer ersten Richtung zum Erzeugen eines ersten zeitverschobenen Teilbildes (1) vor einem entsprechenden eintreffenden Teilbild, und das Durchführen einer bewegungskompensierten Zeitverschiebung jedes der genannten eintreffenden Teilbilder um ein zweites zeitverschobenes Intervall in einer zweiten Richtung, die der genannten ersten Richtung entgegengesetzt ist zum Erzeugen eines zweiten zeitverschobenen Teilbildes (2) nach dem genannten entsprechenden eintreffenden Teilbild, wobei das genannte erste und zweite Zeitverschiebungsintervall kleiner ist als das genannte erste Zeitintervall und wobei die genannten zeitverschobenen Teilbilder (1, 2) eine Video-Signalreihe bilden mit einer Ausgangs-Teilbildfrequenz, die zweimal größer ist als die genannte Eingangs-Teilbildfrequenz, wobei das Ausgangssignal nur aus zeitverschobenen Teilbildern (1, 2) besteht und die eintreffenden Teilbilder nicht ausgegeben werden.

## Revendications

1. Appareil de conversion de fréquence de trame vidéo comprenant :
des moyens (10) pour recevoir une série de trames entrantes ayant une fréquence de trame d'entrée, chaque trame entrante étant espacée d'un premier intervalle de temps prédéterminé de la suivante, et caractérisé par :
des moyens (11-24; 40-44) pour effectuer un décalage de temps à compensation de mouvement de chacune desdites trames entrantes d'un premier intervalle de décalage de temps dans une première direction pour générer une première trame décalée dans le temps (1) précédant une trame entrante correspondante, et pour effectuer un décalage dans le temps à compensation de mouvement de chacune desdites trames entrantes d'un deuxième intervalle de décalage dans le temps dans une deuxième direction opposée à la première direction pour générer une deuxième trame décalée dans le temps (2) suivant ladite trame entrante correspondante dans le temps, le premier et le deuxième intervalles de décalage de temps étant plus petit que ledit premier intervalle de temps et lesdites trames décalées dans le temps (1, 2) constituant une série de signaux vidéo ayant une fréquence de trame de sortie qui vaut le double de ladite fréquence de trame d'entrée, le signal de sortie étant constitué de trames (1, 2) décalées dans le temps uniquement et les trames entrantes n'étant pas délivrées.

2. Appareil de conversion selon la revendication 1, dans lequel ledit premier intervalle de décalage de temps est égal audit deuxième intervalle de décalage de temps.

3. Appareil de conversion selon la revendication 1 ou 2, dans lequel ladite première trame décalée dans le temps (1) apparaît entre une première et une deuxième desdites trames entrantes, et lesdits moyens de décalage de temps (11-24) comprennent un dispositif de temporisation de trame (16) et des moyens (11; 18, 19; 22) couplés à une entrée et à une sortie dudit dispositif de temporisation de trame (16) pour générer ladite première trame décalée dans le temps (1) en fonction à la fois desdites première et deuxième trames entrantes.

4. Appareil de conversion selon la revendication 3, dans lequel ladite première trame décalée dans le temps (1) est plus proche dans le temps de ladite première trame entrante, et lesdits moyens de décalage de temps (11-24) pondèrent des valeurs de ladite première trame entrante supérieures aux valeurs de ladite deuxième trame entrante, lors de la génération de ladite première trame décalée dans le temps (1).

5. Appareil de conversion selon la revendication 1, dans lequel lesdits premier et deuxième intervalles de décalage de temps sont chacun d'un quart dudit premier intervalle de temps prédéterminé.

6. Appareil de conversion selon la revendication 1, dans lequel ledit premier et ledit deuxième intervalles de décalage de temps dépendent de la qualité des vecteurs de mouvement appliqués auxdits moyens de décalage de temps.

7. Appareil de conversion selon l'une quelconque des revendications précédentes, dans lequel lesdits moyens de décalage de temps (40-44) comprennent un dispositif de temporisation de trame (40) pour générer des signaux entrants retardés, et un premier (42) et un deuxième (44) moyens de décalage opérant sous le contrôle de vecteurs de mouvement pour décaler des points de ladite trame retardée conformément auxdits vecteurs de mouvement pour générer ladite première (1′) et ladite deuxième (1˝) trames décalées dans le temps.

8. Procédé de conversion de fréquence d'images vidéo comprenant les étapes suivantes :
on reçoit (10) une série de trames entrantes ayant une première fréquence de trame d'entrée, chaque trame entrante étant espacée d'un premier intervalle de temps prédéterminé de la suivante, et caractérisé par les étapes suivantes :
on effectue (11-24; 40-44) un décalage de temps à compensation de mouvement de chacune desdites trames entrantes d'un premier intervalle de décalage dans le temps dans une première direction pour générer une première trame décalée dans le temps (1) précédant une trame entrante correspondante, et on effectue un décalage dans le temps à compensation de mouvement de chacune desdites trames entrantes d'un deuxième intervalle de décalage dans le temps dans une deuxième direction opposée à la première direction pour générer une deuxième trame décalée dans le temps (2) suivant ladite trame entrante correspondante dans le temps, le premier et le deuxième intervalles de décalage dans le temps étant plus petits que ledit premier intervalle de temps et lesdites trames décalées dans le temps (1, 2) constituant une série de signaux vidéo ayant une fréquence de trame de sortie qui vaut le double de ladite fréquence de trame d'entrée, le signal de sortie étant constitué de trames (1, 2) décalées dans le temps uniquement et les trames entrantes n'étant pas délivrées.
